# EUROPEAN PATENT SPECIFICATION

(11) **EP 1 550 792 B1**
(45) Date of publication and mention of the grant of the patent: **14.05.2008**
(21) Application number: 03798036.4
(22) Date of filing: 12.09.2003
(51) Int. Cl.: F01D 25/34, F03B 11/00

(54) **ELASTICALLY COUPLED BARRING APPARATUS**
ELASTISCH GELAGERTE WELLENDREHVORRICHTUNG
VIREUR DE ROTOR MONTÉ ÉLASTIQUEMENT

(30) Priority: 30.09.2002 CN 02135704
(43) Date of publication of application: 06.07.2005
(73) Proprietor: PANG, Zijing, Qingdao Shandong 266500 (CN)
(72) Inventor: PANG, Zijing, Qingdao Shandong 266500 (CN)
(74) Representative: Viering, Jentschura & Partner
(86) International application number: PCT/CN2003/000767
(87) International publication number: WO 2004/029419

(56) References cited:
- CN-U- 2 118 189
- CN-U- 2 125 749
- CN-Y- 2 385 150
- GB-A- 544 648
- JP-A- 8 296 407
- US-A- 4 083 259
- US-A- 5 148 635
- PATENT ABSTRACTS OF JAPAN vol. 2003, no. 11, 5 November 2003 (2003-11-05) & JP 2003 189556 A (MITSUBISHI ELECTRIC CORP), 4 July 2003 (2003-07-04)

## Description

### FIELD OF THE INVENTION

This invention relates to a special tool to drive a rotor by an elastic couple for adjusting shafting center of a vertical hydroelectric generating set and other rotating devices, and more particularly to an elastic couple turning gear.

### BACKGROUND OF THE INVENTION

During adjusting shafting center of vertical hydroelectric generating set, a rotor needs to be driven by an external force so as to check radial swinging angle of each section. Thus, an even and smooth driving rotation speed, and accurate stop points are required. Furthermore, the rotor should be in a thoroughly free status at each stop point without any disturbance external force exerting on the rotor. Moreover, it should be convenient and quick to operate at the situation. However, the driving method provided by most manufacturers still employs manual driving and came hauling, which causes low safety, high labor intensity and inefficient works. The applicant of the present invention has had two CN patents on improvement of conventional barring method by providing a new auto barring apparatuses: one is CN patent No. 92219180.8 and the other is CN patent No. 99222132.3. However, the two patents still have some shortcomings as follows. The automatic barring apparatuses have a low concentricity with the rotating devices. A rigid connection is between the automatic barring apparatuses and a frame of the rotating device, so that a little deviation between axes of the barring apparatus and the rotor will causes an excessive and unstable driving moment of force, which requires a long time to adjust. Arms of force of the above devices is very long and the pinion gear is assembled in a suspension arm structure, so the two structures are easily deformed under stress to cause incorrect engagement between gears. Moreover, wires will be twisted because the motor is turned along with the device.

GB 544, 648 discloses a turning gear apparatus for an elastic fluid turbine, said apparatus including a motor adapted to be coupled to the turbine rotor for slowly rotating the rotor during turbine shutdown periods, means responsive to a predetermined acceleration of the turbine during operation thereof for effecting the uncoupling of the turning gear apparatus from the turbine rotor, and means responsive to a predetermined minimum turbine speed during the shutting down operation of the turbine for automatically coupling the turbine rotor with the turning gear apparatus.

US 5, 148, 635 discloses a method and apparatus for use in a hydraulic assembly for purposes of repairing and resurfacing of turbine liner walls pitted as a result of cavitation and the like. The method includes rotation of turbine blades and a turbine shaft through a turning mechanism positioned on a blade, so the turning forces are exerted directly between the turning mechanism and the surface of the liner wall. The method and apparatus further includes the use of a repair assembly mounted to the turbine blades for selectively positioning a grinding mechanism adjacent the liner wall for grinding and sanding the same. The grinder mechanism includes components for selectively adjusting horizontal and vertical positioning of the mechanism. The horizontal and vertical positioning components can also be employed with other mechanisms for performing repairing and resurfacing operations.

### SUMMARY OF THE INVENTION

The purpose of this invention is to overcome the shortcomings of the above-mentioned technique and provide an elastic couple barring device. When the apparatus is used for adjusting shafting center of vertical hydroelectric generating set and other rotating devices, the working intensity can be reduced, working conditions can be improved, an operating adjusting time can be decreased, working efficiency and adjusting accuracy can be raised, so that the complicated and massy generating set can be easily turned.

According to the purpose of this invention, the elastically coupled barring apparatus is characterized in that an elastic support 5 is mounted on a frame (6) of a hydroelectric generating set, the elastic support (5) consists of an upper ring (51), a lower ring (52) and multiple elastic ribs (53) made of elastic material and between the upper and lower rings (51,52); a casing (4) with a U-shaped cross section is connected to the elastic support for providing an elastic connection between the frame (6) of the hydroelectric generating set and the elastically coupled barring apparatus; a casing cover (3) is firmly fixed on the casing, reducers (2) each with a motor (1) are installed on the cover evenly or symmetrically positioned at two diametrically opposite sides (an included angle of 180°) of the hydroelectric generating set; output shafts of the reducers extend into the casing (4) under the casing cover (3); the output shaft has a pinion gear (7) mounted thereon and engaged with a gear body (81) of a bull gear (8) received in the casing; the bull gear is connected by keys (10) fitted in key seats (83) which are defined on an inner wall (82) of the bull gear (8) and each have a free rotating angle or by upright posts (84) mounted on the bull gear in an axial direction with the shaft coupling (9) fixed on the rotor (12) of the hydroelectric generating set.

The elastic ribs 53 is made of elastic materials with a rectangular, groove-shaped, T-shaped, I-shape, ring-like or other cross section. When a little deviation occurs between the center of the elastic couple barring apparatus and the driven rotor, a radial resisting stress caused by this deviation is eliminated by the elastic support 5, which provides a convenient operation in a situation, and stable and safer running.

According to the structure of the driven device, the shaft coupling 9 can be an integral or separable type. When the separable type shaft coupling 9 is used, the shaft coupling 9 is connected to the rotor 12 of the driven device through multiple radial linkages 11 to make force on the rotor 12 of the driven device even and stab.

Axial sliding clearance 13 and radial sliding clearance 14 are defined between the gear unit 81 of the bull gear and a horizontal surface and an inner wall of the casing to from a sliding bearing to ensure concentric rotation between the bull gear 8 and the casing 4 with U-shape cross section.

An air clearance is defined between the inner wall of the bull gear and the shaft coupling, and three screws 15 for adjusting concentricity are evenly distributed along the circumference of the shaft coupling. By adjusting the screw 15, the concentricity between the stationary and rotating parts can be adjusted. The casing 4 is filled with lubricating oil to ensure normal operation of bearings.

The key seat 83 is defined on the inner wall 82 of the bull gear with a free rotating angle on the seat to remove the rotor of the device from external force easily and make the rotor in a fully free status. Alternatively, an upright post 84 is mounted on the bull gear corresponding to the parallel key 10 to transmit a torque. In this case, the key of the shaft coupling corresponds to the height of the upright post, so that the shaft coupling has a free rotating angle of a 180°.

The working principle of the elastically coupled barring apparatus is described as follows. When the control mechanism is powered on, the motors 1 evenly or symmetrically in 180° position distributed along the circumference will drive the reducers 2 and pinion gears 7 to rotate, and the pinion gears then drives the engaged bull gears 8 to rotate. Pushed by equal tangential forces, and limited by the sliding bearing consisting of the axial sliding clearance 13 and radial sliding clearance 14, the bull gear will run smoothly. The bull gear 8 drives the shafting coupling 9 through the parallel keys 10, while the shafting coupling 9 drives the rotor of the driven device 12 to rotate smoothly through the linkages 11. When the elastically coupled barring apparatus rotates the driven device 12 and stops at a certain position, it turns back with a little angle to position the parallel key 10 into the free rotating angle so as to remove the rotor of the driven device from the external force. Therefore, the rotor of the driven device will be freely rotated to ensure accurate measurements. When first installing the elastically coupled barring apparatus, the concentricity between the stationary and rotating parts is adjusted by using the three screws 15. After adjustment, the elastic support 5 is firmly mounted on the frame of the driven device 6 and the three screws 15 for adjusting the concentricity are removed.

The present invention has following advantages: the apparatus has a reasonable and simple structure; it is easy to adjust the concentricity because the screws is provided at reasonable positions; elastic support is used instead of the conventional rigid support, so that the apparatus has an improved self-stabilization performance, a small vibration during rotating, and can be operated easily; by using the casing cover, the conventional suspension arm is replaced with the fixed structure, so the deformation due to the suspension arm is eliminated to make the running process of the geat engagement stable and increase the running precision and accuracy; the gear transmission is concealed in the enclosed casing, the apparatus can be operated safely and maintained easily, and the problem of wires twisting is eliminated.

### BRIEF DESCRIPTION OF DRAWINGS

Figure 1 is a schematic sectional view of an elastically coupled barring apparatus of the present invention installed on a rotor of a driven device;
Figure 2 is a sectional view of the elastically coupled barring apparatus of the present invention;
Figure 3 is a sectional view of an elastic support;
Figure 4 is a sectional view of a bull gear;

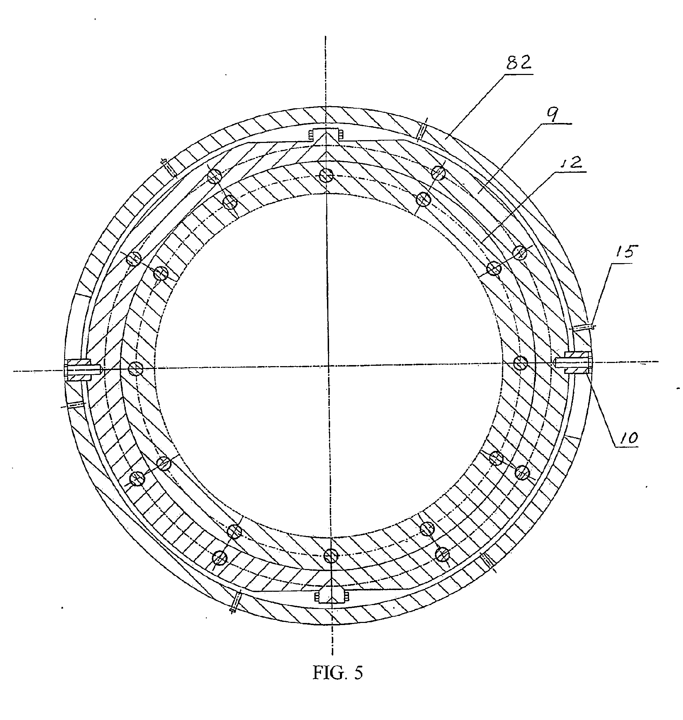

Figure 5 is a sectional view of Fig. 1 taken along the line A-A;
Figure 6 is a schematic sectional view of the bull gear with an upright post; and
Figure 7 is a sectional view of the elastically coupled barring apparatus having the bull gear with the upright post.

### Detail Description of Preferred Embodiments

### Example 1:

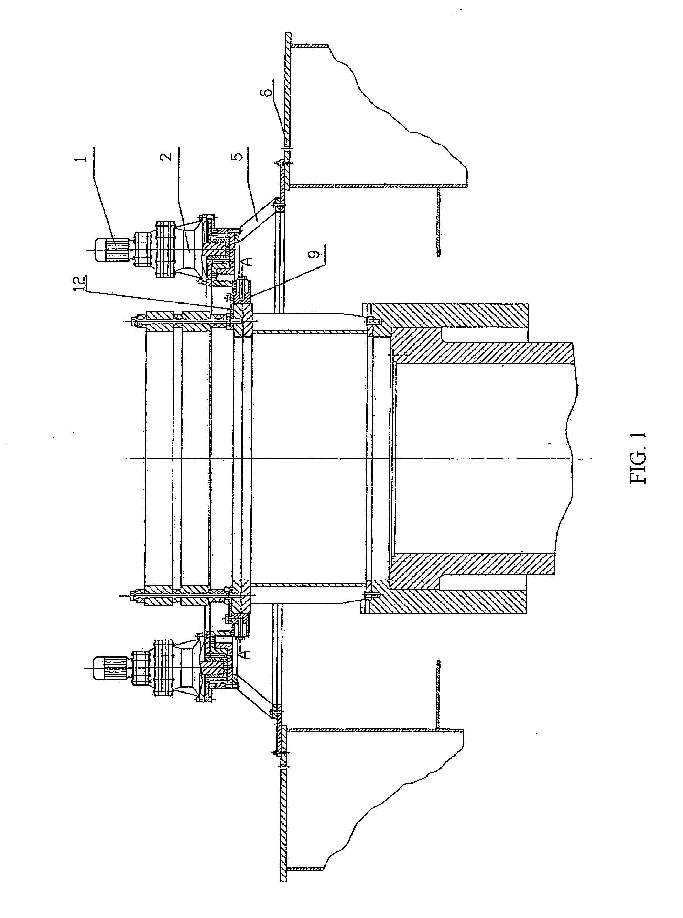

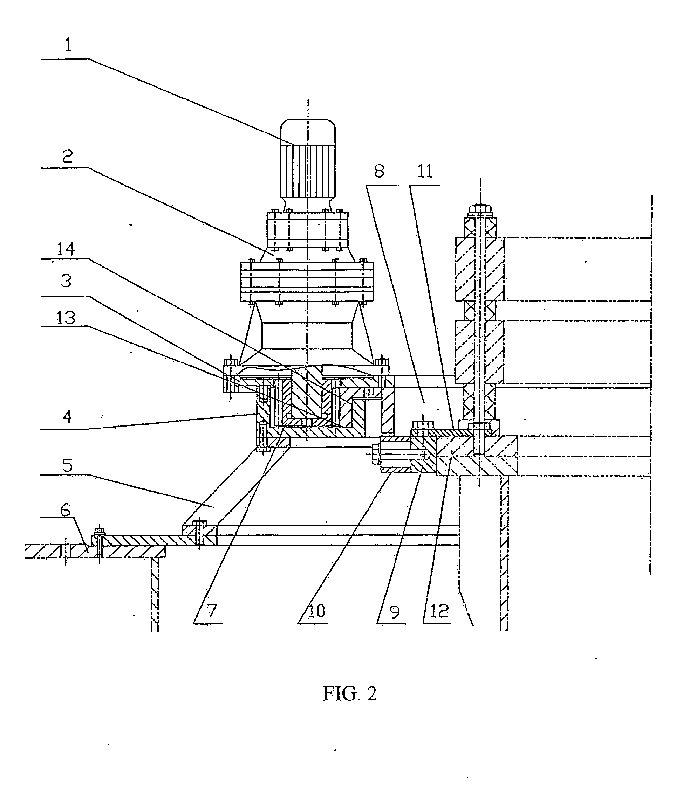

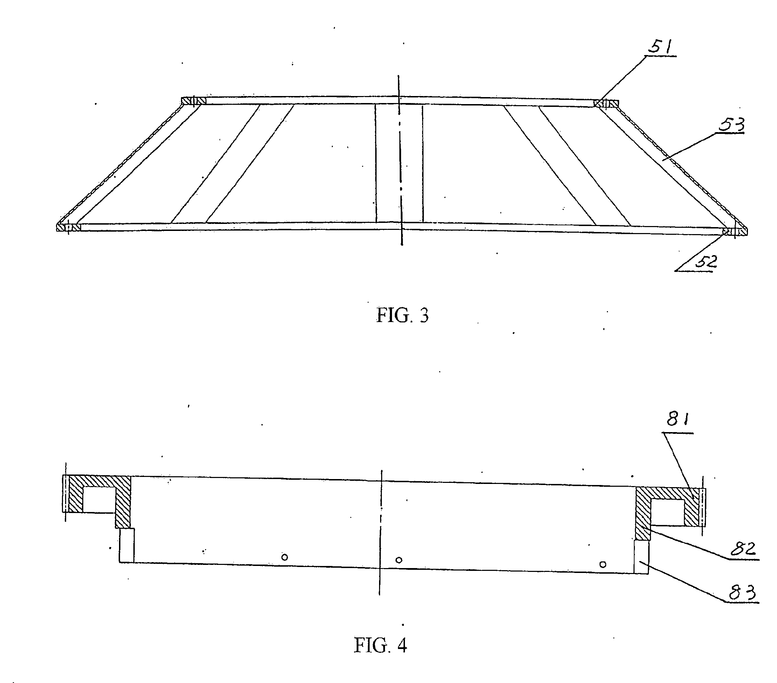

With reference to Figure 1, an elastically coupled barring apparatus is installed on a top frame 6 of a light hydroelectric generating set for adjusting shafting center of the generating set. An elastic support 5 is connected to the top frame 6 of the driven device. Figure 2 and 3 show the elastic support 5 including the upper ring 51, the lower ring 52 and eight elastic ribs 53 between the upper and lower rings. The upper ring is a round ring with a diameter of 2.6m and the lower ring is a round ring with a diameter of 3.8m. The elastic ribs 53 are made of spring steel having a rectangular cross section. A ring-like casing 4 with a U-shape cross section is mounted on the elastic support. An elastic connection is between the top frame 6 of the hydroelectric generating set and the elastically coupled barring apparatus. The casing 4 has a casing cover 3 firmly fixed thereon. Two reducers 2 each with a motor 1 are installed on the casing cover and symmetrically positioned at two diametrically opposite sides (an included angle of 180°) of the hydroelectric generating set to form a couple. The reducer 2, casing cover

and the casing 4 are rigidly connected together. The motor has a power of 1.1KW and a rotating speed of 1500 rpm. The output rotating speed of the reducer is 1 rpm. The output shaft of the reducer extends into the casing 4 under the casing cover 3. A module of the pinion gear 7 connected to the output shaft and a bull gear 8 engaged with the pinion gear is 10. The gear body 81 of the bull gear is received in the casing 4 and two key seats 83 are defined on an inner wall 82 of the bull gean Two parallel keys 10 are respectively received in the key seats 83 for connecting the bull gear 8 and a shafting coupling 9 to transmit the moment of force.

The two parallel keys 10 are symmetrically positioned at two diametrically opposite sides of the rotor (an included angle of 180°). According to the structure of the rotor of the driven device, the shafting coupling 9 is an integral type which is connected to an end of the rotor 12 of the driven device.

An axial sliding clearance 13 is defined between the gear body 81 in the casing and a horizontal surface of the casing to form a plane sliding friction, and an radial sliding clearance 14 about 0.5mm is defined between the gear body 81 and an inner wall of the casing to form a sliding bearing to ensure the bull gear 8 concentric with the casing 4.

Three screws 15 for adjusting concentricity between the bull gear and the shaft coupling are evenly distributed along a circumference of the shaft coupling on the inner wall of the bull gear corresponding to the shaft coupling. The casing 4 is filled with lubricating oil to ensure normal operation of the bearings.

### Example 2:

This elastically coupled barring apparatus is installed on the top frame 6 of a heavy hydroelectric generating set for adjusting shafting center of the generating set. An elastic support 5 is connected to the top frame 6 of the driven device. Figure 2 and 3 show the elastic support 5 including an upper ring 51, a lower ring 52 and twelve elastic ribs 53 between the upper and lower rings. The upper ring 51 is a round ring with a diameter of 2.8m, and the lower ring 52 is a round ring with a diameter of 4.1m. The elastic ribs 53 are made of spring steel with a trough shape cross section. A ring-like casing 4 with a U-shape cross section is mounted on the elastic support 5. An elastic connection is between the top frame 6 of the hydroelectric generating set and the elastically coupled barring apparatus. The casing 4 has a casing cover 3 firmly fixed thereon. Two pairs of (four) reducers 2 each with a motor 1 are installed on the casing cover to form two couples synchronously and equally driving the rotor of hydroelectric generating set, wherein the two reducers 2 in each pair are symmetrically positioned at two diametrically opposite sides (an included angle of 180°) of the hydroelectric generating set. The motor has a power of 0.75 KW and a rotating speed of 1500 rpm. The output rotating speed of the reducer is 0.8 rpm. The output shaft of the reducer extends into the casing 4 under the casing cover 3. The module of the pinion gear 7 connected to the output shaft and the module of the bull gear 8 engaged with the pinion gear is 10. The gear body 81 of the bull gear is received in the casing 4 and two key seats 83 are defined on an inner wall 82 of the bull gear. Two parallel keys 10 are respectively received in the key seats 83 for connecting the bull gear 8 and a shafting coupling 9.

The two parallel keys 10 are symmetrically positioned at two diametrically opposite sides of the rotor (an included angle of 180°). According to the specific structure of the rotor of the driven device, the shafting coupling 9 is a separable type consisting of two parts which is connected to the rotor 12 of the driven device by ten radial linkages 11.

### Example 3:

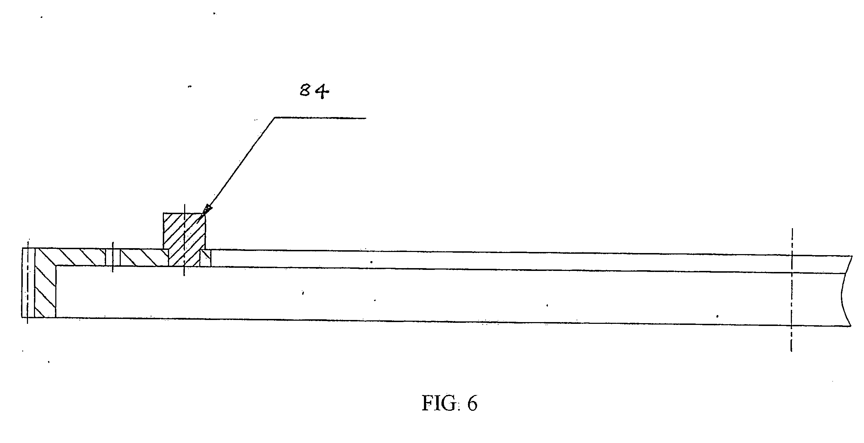

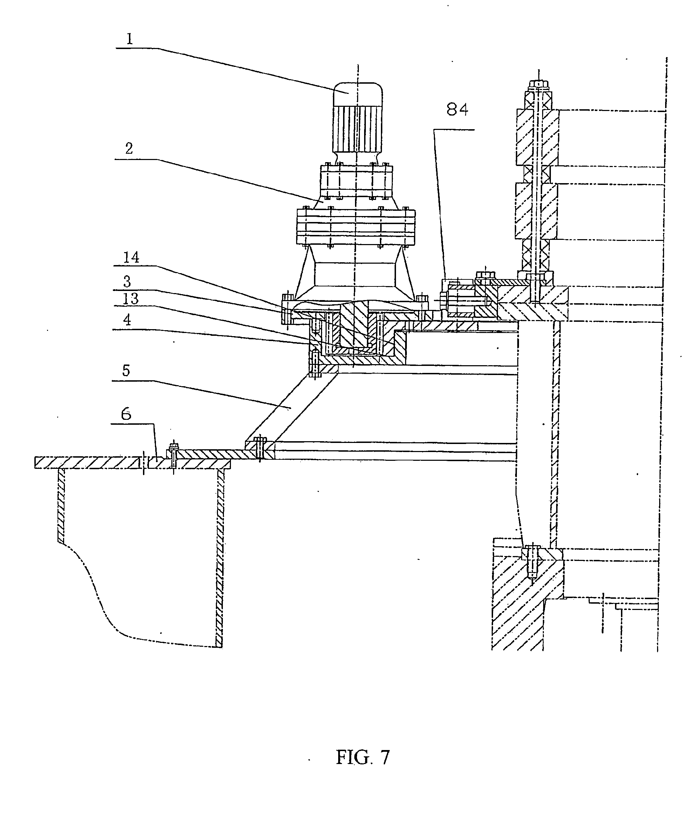

This elastically coupled barring apparatus is used for adjusting shafting center of a super-heavy hydroelectric generating set, and includes three pairs of (six) identical speed reducers each with a motor to form three couples synchronously and equally driving the rotor of the hydraulic generating set, wherein the two reducers and two motors in each pair are symmetrically positioned at two diametrically opposite sides (an included of 180°) of the hydroelectric generating set. Figure 6 shows that an upright post 84 is mounted on the bull gear 8 to correspond to the parallel keys for transmitting torsion. In this case, the key of the shaft coupling corresponds to the height of the upright post, so that the shaft coupling has a free rotating angle of 180°. The structure of this elastically coupled barring apparatus is illustrated in Fig. 7.

Whether the quantity of the elastically coupled barring apparatuses is in even or odd number, the purpose of this invention can be realized as long as the apparatuses are evenly distributed and positioned.

## Claims

1. An elastically coupled barring apparatus, **characterized in that**, an elastic support (5) is mounted on a frame (6) of a hydroelectric generating set, the elastic support (5) consists of an upper ring (51), a lower ring (52) and multiple elastic ribs (53) made of elastic material and between the upper and lower rings (51,52);
a casing (4) with a U-shaped cross section is connected to the elastic support for providing an elastic connection between the frame (6) of the hydroelectric generating set and the elastically coupled barring apparatus;
a casing cover (3) is firmly fixed on the casing, reducers (2) each with a motor (1) are installed on the cover evenly or symmetrically positioned at two diametrically opposite sides (an included angle of 180°) of the hydroelectric generating set;
output shafts of the reducers extend into the casing (4) under the casing cover (3); the output shaft has a pinion gear (7) mounted thereon and engaged with a gear body (81) of a bull gear (8) received in the casing;
the bull gear is connected by parallel keys (10) fitted in key seats (83) which are defined on an inner wall (82) of the bull gear (8) and each have a free rotating angle or by upright posts (84) mounted on the bull gear with the shaft coupling (9) fixed on the rotor (12) of the hydroelectric generating set.

2. The elastically coupled barring apparatus as claimed in claim 1, **characterized in that**, the elastic ribs (53) are made with a rectangular, groove-shaped, T-shaped, 1-shaped or ring-like cross section.

3. The elastically coupled barring apparatus as claimed in claim 1, **characterized in that**, the shaft coupling (9) is an integral type or separable type, which is connected to the rotor (12) of the hydroelectric generating set by multiple radial linkages (11).

4. The elastically coupled barring apparatus as claimed in claim 1, **characterized in that**, an axial sliding clearance (13) and a radial sliding clearance (14) are defined between the gear body (81) of the bull gear and the casing.

5. The elastically coupled barring apparatus as claimed in claim 1, **characterized in that**, an air clearance is defined between an inner wall of the bull gear and the shaft coupling, and three screws (15) for adjusting a concentricity between the bull gear and the shaft coupling are evenly distributed along a circumference of the shaft coupling.

## Patentansprüche

1. Elastisch gekuppelte Drehvorrichtung, **dadurch gekennzeichnet, dass** eine elastische Stütze (5) an einem Rahmen (6) eines hydroelektrischen Generatorsatzes montiert ist, wobei die elastische Stütze (5) aus einem oberen Ring (51), einem unteren Ring (52) und mehreren elastischen Rippen (53) besteht, die aus elastischem Material und zwischen dem oberen und dem unteren Ring (51, 52) ausgebildet sind;
ein Gehäuse (4) mit einem U-förmigen Querschnitt mit der elastischen Stütze verbunden ist, um eine elastische Verbindung zwischen dem Rahmen (6) des hydroelektrischen Generatorsatzes und der elastisch gekuppelten Drehvorrichtung zu schaffen;
eine Gehäuseabdeckung (3) an dem Gehäuse fest fixiert ist, Reduzierstücke (2) mit jeweils einem Motor (1) an zwei diametral gegenüberliegenden Seiten (ein eingeschlossener Winkel von 180°) des hydroelektrischen Generatorsatzes gleichmäßig oder symmetrisch positioniert an der Abdeckung installiert sind;
Abtriebswellen der Reduzierstücke unter die Gehäuseabdeckung (3) in das Gehäuse (4) hinein verlaufen; wobei die Abtriebswelle ein Ritzel (7) aufweist, das daran montiert ist und mit einem Zahnradkörper (81) eines in dem Gehäuse aufgenommenen Zentralrades (8) in Eingriff steht;
wobei das Zentralrad über parallele Keile (10), die in Keilnuten (83) eingepasst sind, welche an einer Innenwand (82) des Zentralrades (8) definiert sind und jeweils einen freien Drehwinkel haben, oder über senkrechte Säulen (84), die an dem Zentralrad montiert sind, mit der Wellenkupplung (9) verbunden ist, die an dem Rotor (12) des hydroelektrischen Generatorsatzes fixiert ist.

2. Elastisch gekuppelte Drehvorrichtung nach Anspruch 1, **dadurch gekennzeichnet, dass** die elastischen Rippen (53) mit einem rechteckigen, nutförmigen, T-förmigen, 1-förmigen oder ringartigen Querschnitt versehen sind.

3. Elastisch gekuppelte Drehvorrichtung nach Anspruch 1, **dadurch gekennzeichnet, dass** die Wellenkupplung (9) ein integraler Typ oder separabler Typ ist, welcher über mehrere radiale Verbindungsstücke (11) mit dem Rotor (12) des hydroelektrischen Generatorsatzes verbunden ist.

4. Elastisch gekuppelte Drehvorrichtung nach Anspruch 1, **dadurch gekennzeichnet, dass** ein axiales Gleitspiel (13) und ein radiales Gleitspiel (14) zwischen dem Zahnradkörper (81) des Zentralrades und dem Gehäuse definiert sind.

5. Elastisch gekuppelte Drehvorrichtung nach Anspruch 1, **dadurch gekennzeichnet, dass** ein Luftspiel zwischen einer Innenwand des Zentralrades und der Wellenkupplung definiert ist, und drei Schrauben (15) zum Einstellen einer Konzentrizität zwischen dem Zentralrad und der Wellenkupplung entlang eines Umfangs der Wellenkupplung gleichmäßig verteilt sind.

## Revendications

1. Vireur couplé de manière élastique, **caractérisé en ce qu'**un support élastique (5) est monté sur un châssis (6) d'un ensemble de génération hydroélectrique, le support élastique (5) se compose d'un anneau supérieur (51), d'un anneau inférieur (52) et de plusieurs rainures élastiques (53) réalisées avec un matériau élastique et entre les anneaux supérieur et inférieur (51, 52) ;
un carter (4) avec une section transversale en forme de U est raccordé au support élastique pour composer un raccordement élastique entre le châssis (6) de l'ensemble de génération hydroélectrique et le vireur couplé de manière élastique ;
un couvercle de carter (3) est fermement fixé sur le carter, des réducteurs (2) chacun avec un moteur (1) sont installés sur le couvercle régulièrement ou positionnés de manière symétrique au niveau de deux côtés diamétralement opposés (un angle inclus de 180°) de l'ensemble de génération hydroélectrique ;
des arbres de sortie des réducteurs s'étendent dans le carter (4) sous le couvercle de carter (3) ; l'arbre de sortie a un engrenage à pignons (7) monté sur celui-ci et mis en prise avec un corps d'engrenage (81) d'une couronne principale (8) reçue dans le carter ;
la couronne principale est raccordée par des clavettes parallèles (10) montées dans des sièges de clavette (83) qui sont définis sur une paroi interne (82) de la couronne principale (8) et ont chacun un angle de rotation libre ou par des montants verticaux (84) montés sur la colonne principale avec un couplage d'arbre (9) fixé sur le rotor (12) de l'ensemble de génération hydroélectrique.

2. Vireur couplé de manière élastique selon la revendication 1, **caractérisé en ce que** les nervures élastiques (53) sont réalisées avec une section transversale rectangulaire, en forme de rainure, en forme de T, en forme de 1 ou en forme d'anneau.

3. Vireur couplé de manière élastique selon la revendication 1, **caractérisé en ce que** le couplage d'arbre (9) est un type solidaire ou un type séparable, qui est raccordé au rotor (12) de l'ensemble de génération hydroélectrique par plusieurs liaisons radiales (11).

4. Vireur couplé de manière élastique selon la revendication 1, **caractérisé en ce qu'**un jeu coulissant axial (13) et un jeu coulissant radial (14) sont définis entre le corps d'engrenage (81) de la couronne principale et le carter.

5. Vireur couplé de manière élastique selon la revendication 1, **caractérisé en ce qu'**un jeu d'air est défini entre une paroi interne de la couronne principale et le couplage d'arbre, et trois vis (15) pour ajuster une concentricité entre la couronne principale et le couplage d'arbre sont réparties régulièrement le long d'une circonférence du couplage d'arbre.
